(19) Europäisches Patentamt
European Patent Office
Office européen des brevets

(11) EP 1 355 954 B1

(12) EUROPEAN PATENT SPECIFICATION

(45) Date of publication and mention of the grant of the patent:
**15.09.2004 Bulletin 2004/38**

(21) Application number: **01983618.8**

(22) Date of filing: **07.11.2001**

(51) Int Cl.[7]: **C08F 4/642**, C08F 10/06

(86) International application number:
**PCT/FI2001/000971**

(87) International publication number:
**WO 2002/038621 (16.05.2002 Gazette 2002/20)**

(54) **PROCESS FOR THE PREPARATION OF PROPYLENE POLYMERS**

VERFAHREN ZUR HERSTELLUNG VON PROPYLENPOLYMEREN

PROCEDE DE PREPARATION DE POLYMERES DE PROPYLENE

(84) Designated Contracting States:
**AT BE CH CY DE DK ES FI FR GB GR IE IT LI LU MC NL PT SE TR**

(30) Priority: **07.11.2000 FI 20002439**

(43) Date of publication of application:
**29.10.2003 Bulletin 2003/44**

(73) Proprietor: **Borealis Technology Oy**
**06101 Porvoo (FI)**

(72) Inventors:
- **VESTBERG, Torvald**
**FIN-06100 Porvoo (FI)**
- **POIKELA, Merja**
**37100 Nokia (FI)**

(74) Representative: **Sundman, Christoffer et al**
**Seppo Laine Oy,**
**Itämerenkatu 3 B**
**00180 Helsinki (FI)**

(56) References cited:
**EP-A1- 0 607 703**
**WO-A1-00/15673**
**WO-A1-00/68315**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 355 954 B1

Printed by Jouve, 75001 PARIS (FR)

## Description

### Background of the Invention

### Field of the Invention

The present invention relates to a process for producing propylene polymers. The present invention in particular concerns a polymerization process using Ziegler-Natta type catalysts in a reactor system with at least one polymerization stage containing at least one reactor in order to produce polypropylenes having high isotacticity.

### Description of Related Art

Polypropylenes are conventionally produced in a reactor system containing at least one polymerization reactor and in the presence of a high-yield catalyst system comprising a catalyst component, a cocatalyst component and a compound acting as an external electron donor. The catalyst component is typically a Ziegler-Natta type catalyst containing as essential components magnesium, titanium and a halogen. In order to control the molecular weight of the polymer, hydrogen can be fed into the polymerization process. Hydrogen can be added during any step of the polymerization.

In addition to the actual polymerization steps carried out in one or several reactors, which can comprise slurry/bulk and gas phase reactors, the polymerization system can comprise pre- and post-polymerization reactor(s). During prepolymerization, catalysts are prepolymerized before they are fed into the actual polymerization process. In addition, it is possible to preactivate and activate the catalyst before (pre)polymenzing. During such a catalyst preactivation step, the catalyst can also be modified by using special vinyl compounds, whereby a nucleated propylene polymer having specific properties is obtained. These kinds of processes, in which the catalyst is modified, are disclosed, e.g., in WO99/24478.

Propylene polymerization is carried out in the presence of external electron donors, which e.g. increase the isotacticity of the polymer.

Processes as discussed above are disclosed in several patents.

However, if especially propylene polymer having high MFR and high isotacticity are desired, the necessary amounts of hydrogen and external donor, respectively, are large in the process. However, the process itself often restricts the possibilities of using sufficiently large amounts of hydrogen and, on the other hand, the use of larger volumes of hydrogen results in a need of expensive and difficult steps for separation of the hydrogen. In general, it has been noted that polypropylene with high MFR causes difficulties in the processes. Excess of hydrogen can further cause problems especially in bulk reactors due to the fact that it separates from the slurry phase.

WO 00/15673 teaches a method of producing solid preactivated catalyst systems, wherein the preparation comprises contacting a procatalyst, co-catalyst and at least one external electron donor to form a preactivated catalyst, which is separated and dried to form a dry, solid preactivated catalyst. The preactivating step disclosed in the above document corresponds to the catalyst activating step discussed below and in the present invention, as will become evident from the following description. Said WO Application does not, however, disclose any separate preactivating and activating steps as the present application. The aim of WO 00/15673 is to produce a catalyst, which can be prepared off-line and stored. The catalyst is intended for use especially in a gas phase polymerization process. In the WO reference there is no mention about the advantages of a balance between the melt flow rate and the isotacticity properties.

### Summary of the Invention

It is an object of the present invention to eliminate the problems relating to the prior art and to provide an improved method for producing propylene homopolymers, propylene copolymers comprising propylene random and heterophasic copolymers.

The object of the invention is, in particular, to provide a propylene polymerization process where the balance between isotacticity and MFR of the propylene polymer can be optimised.

Furthermore, another object of the invention is to provide a process, where the hydrogen response or sensitivity of the polymerization process is increased. As a result, for example, the amount of hydrogen used in the polymerization process can be reduced, while still obtaining polypropylene having an MFR on the same level as a polymer obtained by using the prior art processes. Due to the smaller amount of hydrogen, the need for separating steps of hydrogen can be decreased.

Still a further object of the present invention is to provide a process, wherein the maximum MFR is higher than obtainable by conventional processes.

These and other objects, together with the advantages thereof over known processes and products, which shall become apparent from the specification, which follows, are accomplished by the invention as hereinafter described and claimed.

The invention is based on the provision of a process, wherein the external donor is used in an extremely efficient way in a process for polymerizing propylene, optionally together with other α-olefin comonomers, in the presence of catalyst system of the Ziegler-Natta type.

For the purpose of the present invention, the different steps carried out before the actual polymerization are defined as follows:

Preactivation is a step, wherein a small amount (a maximum of a few percent) of the total amount of the cocatalyst is mixed with the catalyst and a viscous medium, such as a mixture of oil and wax. In prior art processes, no external donor is added at this stage. However, according to the present invention, an external donor is added already during this preactivation step, which allows to use of the external donor in a very efficient way, which means that a very small amount of external donor is needed to obtain the desired effect and properties. The catalyst can be stored at this preactivated stage for several days before it is fed into the process. In the activation step, the rest of the cocatalyst is mixed with the catalyst/oil/wax mixture just a few minutes before a prepolymerization step, if any. A part of the cocatalyst can be added also during the prepolymerizing step. In the prior art processes, the external donor is added to the catalyst system during the activating step and, optionally, during the prepolymerization step (see WO00/15673). Further, in conventional polymerization processes, an external donor is added also during the actual polymerization step.

As is stated above, the preactivation step can be carried out in the presence of a viscous substance, such as an olefinic wax, to provide a preactivated catalyst, which is stable during storage and handling. The catalyst preactivated in wax will allow for easy dosing of the catalyst into the polymerisation reactors. Examples of suitable systems are described in, for example, FI Patent No. 95387.

In addition to the actual polymerisation reactors used for producing the propylene homo- or copolymers, the polymerisation reaction system of the invention can also include a number of additional reactors, such as pre- and/or postreactors such as reactors for prepolymerizing the catalyst with propylene and/or other α-olefin(s) and/or ethylene, if necessary.

The postreactors include reactors used for modifying and improving the properties of the polymer product. Typical examples of the postreactors are additional gas phase reactors for obtaining elastic properties. All reactors of the reactor system are preferably arranged in series.

Finnish Patent Application No. 991057 discloses a method, wherein some of the external donor is added during a preactivation step of the catalyst, which comprises a modification step for getting high-stiffness polypropylene homopolymer or homopolymer matrix. According to that application, it has been noted that the amount of the external donor present in the actual polymerization step could be reduced. However, according to the FI application, the amount of external donor added to the actual polymerization process is still considerably large.

Now it has been surprisingly found that if the external donor is added to the catalyst preactivation step, the efficiency of the external donors is increased to such a level that there is no need to add any external electron donor after the preactivation step, i.e. to the activation/prepolymerization/actual polymerization step, and still propylene polymers having good properties, such as high isotacticity and high MFR are obtained. Xylene solubles (XS) are also remained on the same level as when the external donor is added to the further activation or (pre)polymerization steps, or their amount is only very slightly increased.The total amount of the external donor in the process will be very low, because no external donor is added after the preactivation step. The very small amount of external donor possible present in the polymerization step comes from the small amount of external donor added into the catalyst preactivation step. Hydrogen response is increased, especially during gas phase polymerizations, which enables the preparation of products with higher MFR.

In a preferred embodiment of the present invention, the preactivation step also comprises the catalyst modification step described above. Catalyst is modified by using vinyl compounds in a medium, which is a liquid or a highly viscous hydrocarbon medium and which does not dissolve the polymerized polymer. Furthermore, the modification is preferably accomplished in such a way that all or practically all vinyl compound used for modification is consumed during polymerization of the vinyl compounds. To reach that preferred aim, polymerization is continued at elevated temperature until the concentration of the unreacted vinyl compounds in the catalyst composition after polymerization is about 0.5 wt-% or less. The modification is carried out before any conventional, usually continuous, prepolymerization with an olefinic monomer, to ensure that the polymerization of the vinyl compound is complete.

According to the present invention the catalyst preactivation, comprising preferably the catalyst modification, is carried out in the presence of an external donor, particularly a strongly coordinating external donor. It is essential that no additional external donor is added to the process after the preactivation step, and still good polymer properties are achieved, especially balanced MFR and stiffness properties.

Still one advantage compared to the process disclosed in said WO reference is that the catalyst drying step

can be omitted, which simplifies the total process.

The process according to the present invention is characterized by what is stated in the characterizing part of claim 1.

The invention achieves a number of considerable advantages, some of which were already discussed above. In particular it can be noted that according to the present invention it is possible to produce propylene polymers having high isotacticity and at least reasonable high MFR. Also high crystallinity and high crystallization temperature, good mechanical properties, such as high modulus, high heat resistance and water vapour barrier are properties, which can be obtained according to the present process. The crystallinity is influenced by the high isotacticity (preferably > 98 %) of the homopolymer and by the effective nucleation with the polymerised vinyl compounds, if vinyl modified catalyst is used.

With the present invention the level of xylene solubles remains at the same level or increases only very slightly compared to the process, where additional external donor is added to the process.

A further advantage of the invention is that improvements in operability of the process have been noticed due to the fact that no external donors are fed to the polymerization process. Naturally this is also a cost saving process, because much less external donor is needed.

Polypropylene compositions produced according to the process of the invention can be used in any kind of polymer articles. Particular advantages are obtained by applying the compositions to the manufacture of appliances, automotive parts, pipes, cups, pails, containers, caps or closures. The new material can also be used in various cable and tube applications.

By using the process of the present invention, it is possible to produce propylene polymers having a Melt Flow Rate ($MFR_2$) 0.01 to 1500 g/10 min (measured by ISO Standard 1133, at 230 °C, 2.16 kg load) and isotacticity above 97, even more than 100 for propylene homopolymers or homopolymer matrix. It should be noted that the present invention gives most benefits when polymers with high MFR, i.e. MFR over 10, especially over 100 g/10 min are produced.

Next, the invention will be described more detailed with the aid of the following description.

## Detailed Description of the Invention

Propylene polymers can be obtained by a process according to the present invention by preactivating the catalyst in the presence of a external donor, usually strongly coordinating donor and by optionally activating and possibly by prepolymerizing the preactivated and activated catalyst composition with propylene and/or other α-olefin(s) and/or ethylene and polymerizing propylene optionally together with comonomers (a -olefin(s) and/or ethylene) in the presence of said preactivated, optionally activated and prepolymerized catalyst composition. In a preferred embodiment, the preactivating step comprises also a vinyl compound modification step, as is disclosed above, whereby a nucleated polypropylene product is obtained.

The preactivated/modified catalyst composition is preferably activated with a cocatalyst and optionally prepolymerized with propylene (or with another α-olefin and/or ethylene) and then the obtained catalyst composition is used for catalyzing polymerization of propylene optionally with comonomers. The catalysts used preferably comprise Ziegler-Natta -type high-yield catalysts.

The actual polymerization is carried out in at least one polymerization stage. Typically the polymerization process additionally comprises additional polymerization stages or reactors. In a preferred embodiment the process contains the at least one bulk reaction zone arranged before the gas phase reaction zone, and all the reactors are arranged in a cascade. The polymers prepared comprise propylene homopolymers, propylene random copolymers and propylene block copolymers. Depending on the desired properties of the propylene polymer, the molar mass distribution thereof can be tailored as described below.

In the following, the main features of the invention are discussed in greater detail.

The vinyl compounds used for catalyst modification by polymerization are represented by the formula I

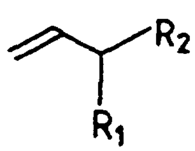

(I)

wherein $R_1$ and $R_2$ together form a 5 or 6 membered saturated or unsaturated or aromatic ring or they stand independently for a lower alkyl comprising 1 to 4 carbon atoms.

The following specific examples of vinyl compounds can be mentioned: vinyl cycloalkanes, in particular vinyl cyclohexane (VCH), vinyl cyclopentane, vinyl-2-methyl cyclohexane and vinyl norbornane, 3-methyl-1-butene, styrene, p-methyl-styrene, 3-ethyl-1-hexene or mixtures thereof. VCH is a particularly preferred monomer.

The polymerization of the vinyl compound, e.g. VCH, can be done in any inert fluid that does not dissolve the polymer formed (e.g. polyVCH). It is important to make sure that the viscosity of the final catalyst/polymerized vinyl compound/inert fluid mixture is sufficiently high to prevent the catalyst particles from settling during storage and transport. The adjustment of the viscosity of the mixture can be done either before or after the polymerization of the vinyl compound. It is, e.g., possible to carry out the polymerization in a low viscosity oil and after the polymerization of the vinyl compound the viscosity can be adjusted by addition of a highly viscous substance. Such highly viscous substance can be a "wax", such as an oil or a mixture of an oil with a solid or highly viscous substance (oil-grease). The viscosity of such a viscous substance is usually 1,000 to 15,000 cP at room temperature. The advantage of using wax is that the catalyst storing and feeding into the process is improved. Since no washing, drying, sieving and transferring are needed, the catalyst activity is maintained.

The weight ratio between the oil and the solid or highly viscous polymer is preferably less than 5 : 1.

In addition to viscous substances, liquid hydrocarbons, such as isobutane, propane, pentane and hexane, can also be used as a medium in the modification step.

The polypropylenes produced with a catalyst modified with polymerized vinyl compounds contain essentially no free (unreacted) vinyl compounds. This means that the vinyl compounds shall be completely reacted in the catalyst modification step. To that end, the weight ratio of the (added) vinyl compound to the catalyst should be in the range of 0.05 to less than 3, preferably about 0.1 to 2.0, and in particular about 0.1 to 1.5. It should be noted that no benefits are achieved by using vinyl compounds in excess.

Further, the reaction time of the catalyst modification by polymerization of a vinyl compound should be sufficient to allow for complete reaction of the vinyl monomer, i.e. the polymerization is continued until the amount of unreacted vinyl compounds in the reaction mixture (including the polymerization medium and the reactants) is less than 0.5 wt-%, in particular less than 2000 ppm by weight (shown by analysis). Thus, when the prepolymerized catalyst contains a maximum of about 0.1 wt-% vinyl compound, the final vinyl compound content in the polypropylene will be below the limit of determination using the GC-MS method (< 0.01 ppm by weight). Generally, when operating on an industrial scale, a polymerization time of at least 30 minutes is required, preferably the polymerization time is at least 1 hour and in particular at least 5 hours. Polymerization times even in the range of 6 to 50 hours can be used. The modification can be done at temperatures of 10 to 70 □C, preferably 35 to 65 □C.

According to the invention the external donor present during the catalyst preactivation step is a silane based donor having generally the formula IV, or a 1,3-diether donor having the formula III.

$$R_nR'_mSi(R''O)_{4-n-m} \qquad (IV)$$

wherein

| | |
|---|---|
| R and R' | can be the same or different and they stand for a linear, branched or cyclic aliphatic, or aromatic group; |
| R" | is methyl or ethyl; |
| n | is an integer 0 to 3; |
| m | is an integer 0 to 3; and |
| n+m | is 1 to 3. |

$$R'R''C(COMe)_2 \qquad (III)$$

wherein R' and R" are the same or different and stand for a linear branched aliphatic or cyclic or aromatic group.

The aliphatic groups in the meanings of R and R' can be saturated or unsaturated. Linear $C_1$ to $C_{12}$ hydrocarbons include methyl, ethyl, propyl, butyl, octyl and decanyl. As examples of suitable saturated branched $C_{1-8}$ alkyl groups, the following can be mentioned: isopropyl, isobutyl, isopentyl, tert-butyl, tert-amyl and neopentyl. Cyclic aliphatic groups containing 4 to 8 carbon atoms comprise, e.g., cyclopentyl, cyclohexyl, methyl cyclopentyl and cycloheptyl.

The external donors used in the present invention are strongly coordinating donors, which form relatively strong complexes with catalyst surface, mainly with $MgCl_2$ surface in the presence of aluminium alkyl and $TiCl_4$. The donor components are characterised by a strong complexation affinity towards catalyst surface and a sterically large and protective hydrocarbon. Strong coordination with $MgCl_2$ requires oxygen-oxygen distance of 2.5 to 2.9 Å [Albizzati et al., Macromol. Symp. 89 (1995) 73-89].

Typically this kind of donors have the structure of the general formula II

$$R'''_n Si(OMe)_{4-n} \quad (II)$$

wherein R''' is a branched aliphatic or cyclic or aromatic group, and n is 1 or 2, preferably 2. [Härkönen et al., Macromol. Chem. 192 (1991) 2857-2863].

In particular, the external donor is selected from the group consisting of dicyclopentyl dimethoxysilane, diisopropyl dimethoxysilane, methylcyclohexyldimethoxy silane, di-isobutyl dimethoxysilane, and di-t-butyl dimethoxysilane, dicyclopentyl dimethoxysilane (donor D) being particularly preferred.

An organoaluminum compound is used as a cocatalyst. The organoaluminium compound is preferably selected from the group consisting of trialkylaluminium, dialkyl aluminium chloride and alkyl aluminium sesquichloride.

The preactivation of the catalyst is carried out by feeding the inert fluid, the catalyst component, the cocatalyst and the external donor in desired order into a stirred (batch) reactor. It is preferred to feed the inert fluid first and then the cocatalyst to remove any impurities. It is also possible to add the catalyst after the inert fluid and then the cocatalyst with the donor.

If the catalyst is modified during the preactivation step by using vinyl compounds, the weight ratio of the vinyl compound to the catalyst is less than 3, preferably 2 or less. The vinyl compound is reacted with the catalyst until all or practically all the vinyl compound has reacted (polymerized). As mentioned above, a polymerization time of 1 hour represents a minimum on an industrial scale, usually the reaction time should be 5 hours or more.

According to the invention, in the preactivation step the molar ratio between the donor and the Ti of the catalyst is 0.1 to 10, preferably 0.3 to 5, in particular 0.5 to 2.0. The Al/Ti (aluminium from cocatalyst and Ti from the catalyst) molar ratio is in excess of 1, preferably 2 to 10, in particular 2.5 to 6.

After the reaction, the preactivated catalyst can be separated from the reaction medium or the content of the entire reactor batch is used for polymerization of propylene. The separation of the catalyst can be carried out by, e.g., filtering or decanting.

Additional cocatalyst, preferably trialkylaluminium (TEA), is added during the activation or prepolymerization step giving the normal final Al/Ti molar ratio from 100 to 500, that is used in conventional processes.

It should be pointed out that because according to the invention no additional external electron donor is added after the preactivation step to the process, said Al/Ti molar ratio will not increase and thus remains at a much lower level as in conventional processes using high-yield Ziegler-Natta catalyst systems and where external donor is added to the activation/prepolymerization steps.

As a catalyst for propylene polymerization any stereospecific Ziegler-Natta catalyst can be used, which is capable for catalyzing polymerization and copolymerization of propylene and comonomers at a pressure of 5 to 100 bar, in particular 25 to 80 bar, and at a temperature of 40 to 110 □C, in particular 60 to 110 □C.

Generally, the Ziegler-Natta catalyst system used in the present invention comprises a catalyst component, a cocatalyst component, an external donor, the catalyst component of the catalyst component containing as essential components magnesium, titanium and halogen. The effect of the external donor has been used extremely efficiently by introducing it already - and only to the preactivation/modification step. Thus very small amount of it is needed in order to obtain the desired XS, high isotacticity and MFR values for the polymer.

Examples of suitable catalyst systems are described in, for example, Finnish Patents Nos. 86866, 96615 and 88047 and 88048.

One particularly preferred catalyst component, which can be used in the present invention, is disclosed in FI Patent No. 88047. Another preferred catalyst is disclosed in Finnish Patent Application No. 963707.

A catalyst system useful in the present process can be prepared by reacting a magnesium halide compound with titanium tetrachloride and an internal donor. The magnesium halide compound is, for example, selected from the group of magnesium chloride, a complex of magnesium chloride with a lower alkanol and other derivatives of magnesium chloride. $MgCl_2$ can be used as such or it can be combined with silica, e.g. by absorbing the silica with a solution or slurry containing $MgCl_2$. The lower alkanol used can be preferably methanol or ethanol, particularly ethanol.

The titanium compound used in the preparation of the procatalyst is preferably an organic or inorganic titanium compound, having an oxidation state of titanium of 3 or 4. Also other transition metal compounds, such as vanadium, zirconium, chromium, molybdenum and tungsten compounds can be mixed with the titanium compound. The titanium compound usually is halide or oxyhalide, an organic metal halide, or a purely metal organic compound, in which only organic ligands have been attached to the transition metal. Particularly preferable are the titanium halides, especially $TiCl_4$. Preferably the titanation is carried out in two or three steps.

The Ziegler-Natta catalyst used can also be a heterogeneous unsupported $TiCl_3$ -based catalyst. This kind of catalysts are typically solid $TiCl_3$ in a delta crystalline form which are activated with aluminium-chloride-alkyls, such

as diethylaluminiumchloride. The solid $TiCl_3$ catalysts are typically prepared by reduction of $TiCl_4$ with aluminium-alkyls and/or aluminium-chloride-alkyls, possibly combined with heat treatment to maximise the desired delta crystalline form of $TiCl_3$. The performance, especially stereospecificity, of these catalyst can be improved by using Lewis-bases (electron donors), such as esters, ethers or amines.

One particularly attractive catalyst type comprises a transesterified catalyst, in particular a catalyst transesterified with phthalic acid or its derivatives (cf. the Finnish patents mentioned above). The alkoxy group of the phthalic acid ester used in the transesterified catalyst comprises at least five carbon atoms, preferably at least 8 carbon atoms. Thus, as the ester can be used for example propylhexyl phthalate, dioctyl phthalate, dinonyl phthalate, diisodecyl phthalate, di-undecyl phthalate, ditridecyl phthalate or ditetradecyl phthalate.

Summarizing what has been stated above, the process according to the invention comprises the following steps:

- introducing a catalyst, a cocatalyst and an external donor into an inert fluid for catalyst preactivation comprising possibly catalyst modification,
- preferably activating the preactivated catalyst with a cocatalyst,
- and further optionally prepolymerizing the catalyst with propylene and/or other α-olefin(s) and/or ethylene followed by polymerizing of propylene optionally together with other α-olefin(s) and/or ethylene. All the steps after the preactivating step are carried out in the absence of any additional external donor.

The propylene homo- or copolymer produced according to the invention can have a unimodal or bimodal molar mass. Thus, the equipment of the polymerization process can comprise any polymerization reactors of conventional design for producing propylene homo- or copolymers.

For the purpose of the present invention, "slurry reactor" designates any reactor, such as a continuous or simple batch stirred tank reactor or loop reactor, operating in bulk or slurry and in which the polymer forms in particulate form. "Bulk" means a polymerization in reaction medium that comprises at least 60 wt-% monomer. According to a preferred embodiment the slurry reactor comprises a loop reactor. By "gas phase reactor" is meant any mechanically mixed or fluid bed reactor. Preferably the gas phase reactor comprises a mechanically agitated fluid bed reactor with gas velocities of at least 0.2 m/sec.

Thus, the polymerization reactor system can comprise one or more conventional stirred-tank slurry reactors, as described in WO 94/26794, or one or more gas phase reactors. Preferably the reactors used are selected from the group of loop and gas phase reactors and, in particular, the process employs at least one loop reactor and at least one gas phase reactor. This alternative is particularly suitable for producing bimodal polypropylene. It is also possible to use several reactors of each type, e.g. one loop reactor and two or three gas phase reactors, or two loops and one gas phase reactor, in series.

A preferred embodiment of the invention comprises carrying out the polymerization in a process comprising loop and gas phase reactors in a cascade where the loop reactor operates in liquid propylene and at high polymerization temperatures. It is possible to have a flash between loop and gas phase reactors. The second polymerization step is made in gas phase reactor(s) in order to broaden the molar mass distribution of the polymer.

In every polymerization step it is possible to use also comonomers selected from the group of ethylene, propylene, butene, pentene, hexene and alike as well as their mixtures.

According to the process of the invention no external donor is added after the preactivation step. This results in highly improved hydrogen response in the process, especially in the gas phase. Due to the improved hydrogen response or sensitivity less hydrogen is needed in order to get polypropylene having the same MFR level as if external donor were added into the polymerization step or with the same amount of hydrogen polymer with higher MFR is obtained. Special advantages are achieved, when propylene with high MFR is produced, especially in gas phase.

In addition to the actual polymerization reactors used for producing the propylene homo- or copolymer, the polymerization reaction system can also include a number of additional reactors, such as pre- and/or postreactors, as is disclosed above.

The gas phase reactor can be an ordinary fluidized bed reactor, although other types of gas phase reactors can be used. In a fluidized bed reactor, the bed consists of the formed and growing polymer particles as well as still active catalyst come along with the polymer fraction. The bed is kept in a fluidized state by introducing gaseous components, for instance monomer on such flowing rate, which will make the particles act as a fluid. The fluidizing gas can contain also inert carrier gases, like nitrogen and also hydrogen as a polymer molecular weight controlling agent. The fluidized gas phase reactor can be equipped with a mechanical mixer.

The gas phase reactor used can be operated in the temperature range of 50 to 115 °C, preferably between 60 and 110 °C and the reaction pressure between 5 and 50 bar and the partial pressure of monomer between 2 and 45 bar.

The propylene homo- or copolymer produced preferably has a MWD of 2 to 20, preferably 3 to 10, and a

$MFR_2$ in the range of 0.01 to 1500 g/10 min, isotacticity over 97, even more than 100 for propylene homopolymers or propylene homopolymer matrix. It should be noted that the present invention gives most benefits when polymers with high MFR, i.e MFR over 10, especially over 100 g/10 min are produced.

If desired, the polymerization product can be fed into a gas phase reactor in which a rubbery copolymer (ethylene) is provided by a (co)polymerization reaction to produce a modified polymerization product This polymerization reaction will give the polymerization product properties of e.g. improved impact strength.

An elastomeric product can also be provided by melt blending a ready-made or natural elastomer to the polymer product containing no elastomer made in a postreactor. The amount of a rubbery component can vary in wide ranges, depending on the properties desired.

The present polymerisation product from the reactor(s), so called reactor powder in the form of polypropylene powder, fluff, spheres etc., is normally melt blended, compounded and pelletised with adjuvants, such as additives, fillers and reinforcing agents conventionally used in the art and/or with other polymers. Thus, suitable additives include antioxidants, acid scavengers, antistatic agents, flame retardants, light and heat stabilizers, lubricants, nucleating agents, clarifying agents, pigments and other colouring agents including carbon black. Fillers such as talc, mica and wollastonite can also be used. In addition propylene polymers can blended and optionally compounded with a propylene polymer manufactured in ordinary processes, or with another polymer, in particular a polyolefin selected from the group of LD-, LLD-, MD- and HD-polyethylenes and polybutylene.

The reinforcing agents suitable for use in the present invention can be selected from chopped or continuous glass fibres, carbon fibres, steel fibres and cellulose fibres.

The present blends can be produced by methods known *per se*, e.g. by using a batch or a continuous process. As examples of typical batch mixers, the Banbury and the heated roll mill can be mentioned. Continuous mixers are exemplified by the Farrel mixer, the Buss co-kneader, and single- or twin-screw extruders.

The homopolymer or copolymer composition thus obtained can be used for the manufacture of moulded and extruded articles, in particular articles processed by injection moulding, compression moulding, thermoforming, blow moulding or foaming. The present polymers are useful for preparing pipes, tubes, cables, sheets or films as well as for manufacturing cups, pails, bottles, containers, boxes, automotive parts, appliances, technical articles, caps, closures and lids.

The following non-limiting examples illustrate the invention.

The test methods used in the following tables and examples comprised the following:

$MFR_2$: ISO 1133 Standard, at 230 °C, using 2.16 kg load

Determination of xylene soluble fraction (XS): 2.0 g of polymer are dissolved in 250 ml p-xylene at 135 °C under agitation. After 30±2 minutes the solution is allowed to cool for 15 minutes at ambient temperature and then allowed to settle for 30 minutes at 25±0.5 °C. The solution is filtered with filter paper into two 100 ml flasks.

The solution from the first 100 ml vessel is evaporated in nitrogen flow and the residue is dried under vacuum at 90 °C until constant weight is reached.

The xylene soluble fraction is calculated using the following equation:

$$XS\ \% = (100 \times m_1 \times v_0) / (m_0 \times v_1),$$

wherein

| | |
|---|---|
| $m_0$ = | initial polymer amout (g) |
| $m_1$ = | weight of residue (g) |
| $v_0$ = | initial volume (ml) |
| $v_1$ = | volume of analysed sample (ml) |

Molar mass of ethylene-propylene rubber was determined by using GPC (Gas Permeability Chromatography).

Thermal properties:

Melting temperature, $T_m$, crystallisation temperature, $T_{cr}$, and the degree of crystallinity were measured with Mettler TA820 differential scanning calorimetry (DSC) on 3±0.5 mg samples. Both crystallisation and melting curves were obtained during 10 □C/min cooling and heating scans between 30 °C and 225 °C. Melting and crystallisation temperatures were taken as the peaks of endotherms and exotherms. The degree of crystallinity was calculated by

comparison with heat of fusion of a perfectly crystalline polypropylene, ie., 209 J/g.

Calculated MFR of material produced in the gas phase polymerisation:

$$MFRtot = (MFR1^{exp} \times W1 + MFR2^{exp} \times W2)^{1/exp}$$

Where

MFRtot = final MFR
MFR1 = MFR of material produced in bulk polymerisation
MFR2 = MFR of material produced in the gas phase polymerisation
W1 = Part of the product produced in the bulk polymerisation
W2 = Part of the product produced in the gas phase polymerisation

Isotacticity is measured by FTIR

**Example 1**

A highly active and stereospecific Ziegler Natta catalyst (ZN catalyst) prepared according to Finnish Patent No. 88047 was used. The catalyst was modified with a small amount of vinyl cyclo hexane (VCH) in accordance with Finnish Patent No. 991057.

All raw materials were essentially free from water and air and all material additions to the reactors and the different steps were done under inert conditions.

114 ml Technol 68 oil was added to a 1 litre glass reactor. The reactor was heated to 85 °C and nitrogen was bubbled through the oil for 2 hours. The temperature was decreased to 17 °C. 7.2 ml TEA in 7,2 ml heptane was added to the reactor. 4.1 ml donor D was added and allowed to react for 15 minutes. 40 gram of the ZN catalyst was added, Ti content 2.1 w-%. The Al/Ti and Al/D molar ratio in the mixture was thus 3 (=>D/Ti 1). After 10 minutes addition of 32 gram VCH starts, which takes 30 minutes. While maintaining the 0,5 bar nitrogen pressure the temperature was increased to 55 °C and maintained there for 20 hours. Thereafter 38 ml hot Snowwhite MD (wax) was added to the reactor. Finally the reactor was cooled to about 20 °C and samples of the VCH modified catalyst were taken for polymerization tests.

The VCH modified catalyst was used for polymerisation of propylene in a 5 litre reactor with stirrer. No external donor was added to the catalyst or to the reactor. 0.145 ml tri ethyl aluminium (TEA) and 30 ml n-pentane were mixed and allowed to react for 5 minutes. Half of the mixture was added to the reactor and the other half was mixed with 219 mg of the oil/grease/catalyst mixture (= 53 mg dry catalyst). After 10 minutes the oil/grease/catalyst/TEA/n-pentane mixture was added to the reactor. The Al/Ti molar ratio was 250. The Al/D molar ratio was 250 (= D/Ti 1 mol/mol) and the external donor comes exclusively with the catalyst from the VCH modification step. 800 mmol hydrogen and 1400 gram propylene was added into the reactor and the temperature was raised to 80 °C within 20 minutes while mixing. The reaction was stopped after 30 minutes at 80 °C by flashing out unreacted propylene.

The polymer powder was analysed for MFR, xylene solubles (XS), isotacticity (FTIR) and thermal properties. Though polymerisation was done without addition of external donor XS is as low as 4.2 w-%. Other results are shown in Table 1.

**Comparative Example 1**

This example was done in accordance with Example 1, with the exception that the VCH modification of the catalyst was done totally without external donor. No external donor was added during polymerisation so also the polymerisation was done totally without external donor. XS was 34 w-%.

**Comparative Example 2**

This example was done in accordance with Comparative Example 1 with the exception that a small amount of external donor (donor D) was added to the catalyst together with TEA during activation of the catalyst. The donor amount corresponds to D/Ti 1 (= Al/D 250) mol/mol. The total amount of external donor in the experiment corresponds to example 1, but XS is still much higher.

**Comparative Example 3**

This example was done in accordance with Comparative Example 2 with the exception that the D/Ti in polymerisation was 5 (= Al/D 50). The polymer properties in this comparative example are comparable to those in example 1. This shows that the donor is much more efficient if it is present already in the VCH modification step than if it is added to the catalyst during activation prior to polymerisation. Results of comparative examples 1 to 3 are disclosed in Table 1.

**Example 2**

This example was done in accordance to Example 1, with the exception that the amount of hydrogen was 1500 mmol and the polymerisation time was 20 minutes. Though no external donor was added in the polymerisation step the polymer have low XS and high isotacticity, 3.7 w-% and 103.8 %, respectively. Results are shown in Table 2.

**Comparative Example 4**

This example was done in accordance with Example 2, with the exception that the VCH modification of the catalyst was done totally without any external donor and that donor D was used in the polymerisation (added in activation step) as external donor. The Al/D ratio in polymerisation was 35 (=D/Ti 7.1). By comparing Example 2 and Comparative Example 4 it can be seen that the polymer properties are similar, cf. Table 2. However, in Comparative Example 4, a seven times higher amount of donor is needed to reach the same properties as in Example 2.

**Example 3**

This example was done in accordance with Example 2, but after the bulk polymerisation the polymerisation was continued in the gas phase for 98 minutes, giving a split in production between bulk and gas phase of 60/40. The total pressure in the gas phase polymerisation was 20 barg, temperature 80 °C and hydrogen concentration 10 mol-%. The polymer has low XS, 3.5 w-%, and high isotacticity, 102,9 %. The MFR of polypropylene produced in the gas phase was about 160 g/10min (according to the calculations). See Table 2.

**Comparative Example 5**

This example was done in accordance to Example 3, with the exceptions that the VCH modification of the catalyst was done totally without external donor, donor D was used as external donor in the polymerisation step (added in activation step) and that the hydrogen concentration in the gas phase polymerisation was 15 mol-%. The Al/D ratio in the polymerisation was 35 (=D/Ti 7.1). The polymerisation time 85 minutes gave bulk/gas phase split 60/40. The polymer properties are comparable to those in Example 3, Table 2. Although in this comparative example 50 % more hydrogen was used in the gas phase compared to Example 3, the MFR value is not higher, but on the same level. This shows that the hydrogen sensitivity can be improved with this invention, while other polymer properties remain unchanged.

**Example 4**

This example was done in accordance with Example 3, with the exception that the hydrogen in the bulk phase was 1920 mmol and that after the gas phase polymerisation the polymerisation was continued in an ethylene/propylene gas phase at 7 barg for 180 minutes. The temperature in the ethylene/propylene gas phase was 70 °C and the hydrogen amount was 60 mmol. The ethylene/propylene comonomer ratio was 0,54 mol/mol. The molar mass of the rubber phase was 276,000 g/mol. Table 2.

**Comparative Example 6**

This example was done in accordance with Comparative Example 4 but after the gas phase polymerisation the polymerisation was continued in an ethylene/propylene gas phase at 7 barg for 140 minutes. The temperature in the ethylene/propylene phase was 70 °C and hydrogen amount 60 mmol. The comonomer ratio in the reactor was 0.56 mol/mol. The molar mass of the rubber was 316,000 g/mol, table 2. By comparing Example 4 and Comparative Example 6 it can be seen that a better hydrogen sensitivity can be achieved also in the ethylene/propylene phase with this invention, while the other polymer properties remain unchanged.

### Example 5

Preactivation of the catalyst with a small amount of TEA and donor D was done in the following way:

125 ml of Technol 68 oil was added to a 1 litre glass reactor. The reactor was heated to 85 °C and nitrogen was bubbled through the oil for 2 hours. The temperature was decreased to 15 °C. 4.8 ml TEA and 4.0 ml donor D were mixed and allowed to react for 15 minutes. The TEA/donor D mixture was added to the reactor and after 15 minutes 40 gram of highly active and stereospecific Ziegler Natta catalyst (ZN catalyst) was added during 30 minutes. The ZN catalyst was made according to Finnish Patent No. 88047, and had Ti content of 2.1 w-%. The Al/Ti and Al/D molar ratio in the mixture was thus 2 (=>D/Ti 1). 45 ml hot Snowwhite MD (wax) was added to the reactor. The temperature was increased to 60 °C during 65 minutes and after 2 hours at 60 °C mixture was cooled down to room temperature.

The preactivated catalyst was used for polymerising propylene without adding external donor in the polymerisation step, in the same way as is described in Example 1. The product has low XS and high isotacticity, Table 3.

### Comparative Example 7

In this example the catalyst was not subjected to preactivation. The dry catalyst was activated in the presence of TEA and donor D as described in example 1. Al/Ti and Al/D molar ratio was 250 mol/mol (=> D/Ti 1). The total amount of donor D was thus the same as in example 5, but still the XS value is very high and isotacticity is very low in the polymer produced according to this comparative example. The difference between example 5 and comparative example 7 shows that the donor is much more efficient if it is added already in the preactivation step than if added in the activation prior to polymerisation. Results are disclosed in Table 3.

### Comparative Example 8

This example was done in accordance with Comparative Example 7, with the exception that the Al/D ratio in polymerisation was 80 (= D/Ti 3.1). The polymer properties are comparable to those in Example 5. This shows that about 3 times higher amount of donor must be added if the donor is added to activation than if the donor is present during preactivation. Table 3.

### Example 6

This example was done in accordance with Example 5, but after the bulk polymerisation the polymerisation was continued in the gas phase at 80 °C and 20 barg. Table 3.

### Comparative Example 9

This example was done in accordance with Comparative Example 8, but after the bulk polymerisation the polymerisation was continued in the gas phase at 80 °C and 20 barg.

It can be seen that in Comparative Example 9, 3.1 times more donor is used to get roughly the same XS and isotacticity values as in Example 6. See Table 3.

Table 1

| | | Example 1 | Comparative Example 1 | Comparative Example 2 | Comparative Example 3 |
|---|---|---|---|---|---|
| Type of catalyst | | modcat/D | modcat | modcat | modcat |
| Al/D in polymerisation | mol ratio | - | - | 250 | 50 |
| Al/D total | mol ratio | 250 | - | 250 | 50 |
| D/Ti total | mol/ratio | 1 | 0 | 1 | 5 |
| | | | | | |
| Activity | kgPP/gcat | 38.5 | 21.8 | 34.2 | 44.8 |
| MFR | g/10min | 63 | | 460 | 50 |
| XS | w-% | 4.2 | 34 | 13.9 | 3.2 |
| Isotacticity (FTIR) | % | 102 | | 94,1 | 103 |

Table 1 (continued)

| | | Example 1 | Comparative Example 1 | Comparative Example 2 | Comparative Example 3 |
|---|---|---|---|---|---|
| Type of catalyst | | modcat/D | modcat | modcat | modcat |
| Melting point | °C | 164.5 | | 161.2 | 166.1 |

REMARKS:
Bulk polymerization: 80 °C, 30 min, 800 mmol hydrogen
Modcat/D = vinyl compound modified catalyst with Donor D (in preactivation)
Modcat = vinyl compound modified catalyst without Donor D (in preactivation)

Table 2

| | | Example 2 | Compar. Example 4 | Example 3 | Compar. Example 5 | Example 4 | Compar. Example 6 |
|---|---|---|---|---|---|---|---|
| Type of catalyst | | modcat/D | Modcat | modcat/D | modcat | modcat/D | modcat |
| | | | | | | | |
| Donor added In Polymerisation, Al/D | mol/mol | 0 | 35 | 0 | 35 | 0 | 35 |
| Al/D total | mol/mol | 250 | 35 | 250 | 35 | 250 | 35 |
| Al/Ti | mol/mol | 250 | 250 | 250 | 250 | 250 | 250 |
| D/Ti total | mol/mol | 1 | 7.1 | 1 | 7.1 | 1 | 7.1 |
| | | | | | | | |
| **Bulk polymerisation** | | | | | | | |
| Hydrogen | mmol | 1540 | 1500 | 1540 | 1500 | 1920 | 1500 |
| | | | | | | | |
| **Properties from bulk polymerisation** | | | | | | | |
| Activity | kgPP/gcat | 34 | 31 | | | | |
| XS | w-% | 3.7 | 3.5 | -3.7 | -3.5 | | |
| MFR | g/10min | 190 | 190 | -190 | -190 | | |
| Isotacticity (FTIR) | % | 103.8 | 104.3 | | | | |
| Melting point | °C | 163.7 | 163.3 | | | | |
| **Gas phase polymerisation: 80 °C** | | | | | | | |
| Hydrogen | mmol | - | - | 430(10-%) | 600(15-%) | 430 (10-%) | 600 (15-%) |
| Polymerisation time | min | - | - | 98 | 85 | 63 | 80 |
| | | | | | | | |

Table 2 (continued)

| | | Example 2 | Compar. Example 4 | Example 3 | Compar. Example 5 | Example 4 | Compar. Example 6 |
|---|---|---|---|---|---|---|---|
| **Properties after Gas phase polymerisation** | | | | | | | |
| Split bulk/gas phase | %/% | - | - | 60/40 | 60/40 | -70/30 | ~61/39 |
| MFR | g/10min | - | - | 170 | 180 | -250 | ~180 |
| MFR of gas phase material, calculated | g/10min | - | - | 160 | 170 | | |
| Isotacticity | % | - | - | 102.9 | 104.4 | -103.7 | -104.4 |
| XS | wt-% | - | - | 3.5 | 3.2 | -4.1 | ~3.2 |
| Melting point | °C | - | - | 163.5 | 164.1 | -163.4 | ~164.1 |
| **Conditions In rubber reactor** | | | | | | | |
| 70 °C, 60 mmol hydrogen | | - - | - - | - - | - - | | |
| Comonomer ratio | | - | - | - | - | 0.54 | 0.56 |
| | | | | | | | |
| **Properties after rubber reactor** | | | | | | | |
| MFR | g/10min | - | - | - | - | 106 | 72 |
| XS | w-% | - | - | - | - | 20.8 | 18.2 |
| REMARKS:<br>Bulk polymerization conditions: 80 °C, 20 min, 800 mmol hydrogen, Donor D, Al/Ti ratio 250.<br>Modcat/D = vinyl compound modified catalyst with Donor D (in preactivation)<br>Modcat = vinyl compound modified catalyst without Donor D (in preactivation) | | | | | | | |

Table 3

| | | Example 5 | Compar. Example 7 | Compar. Example 8 | Example 6 | Compar. Example 9 |
|---|---|---|---|---|---|---|
| Catalyst | type | Cat/D/wax | normal cat | normal cat | Cat/D/wax | normal cat |
| | | | | | | |
| Polymerisation steps | | only bulk | only bulk | only bulk | bulk + gas | bulk + gas |
| Donor added in polymerisation | mol ratio | - | 250 | 80 | - | 80 |
| Al/D total | mol ratio | 250 | 250 | 80 | 250 | 80 |
| D/Ti, total | mol/ratio | 1 | . 1 | 3.1 | 1 | 3.1 |
| | | | | | | |
| **Properties from bulk polymerisation** | | | | | | |
| Activity | kgPP/gcat | 15.4 | 24.5 | 28.3 | | |

Table 3 (continued)

| | | Example 5 | Compar. Example 7 | Compar. Example 8 | Example 6 | Compar. Example 9 |
|---|---|---|---|---|---|---|
| **Properties from bulk polymerisation** | | | | | | |
| MFR | g/10min | 10.4 | 23 | 7.9 | -10.4 | -7.9 |
| XS | w-% | 3 | 7.4 | 2.7 | -3 | -2.7 |
| Isotacticity (FTIR) | % | 97.4 | 92.8 | 98.2 | -97.4 | ~98.2 |
| Melting point | °C | 164.5 | 163.6 | 165.3 | | |
| | | | | | | |
| **Properties after bulk+gas polymerisation** | | | | | | |
| Production split bulk/gas phase | % | - | - | - | 60/40 | 60/40 |
| MFR, final | g/10min | - | - | - | 29 | 25.2 |
| MFR of gas phase material, calculated | g/10min | - | - | - | 200 | 190 |
| XS | w-% | - | - | - | 3.0 | 2.4 |
| Isotacticity | % | - | - | - | 99.5 | 100.3 |
| Melting point | °C | - | - | - | 162.6 | 163.4 |
| REMARKS:<br>Bulk polymerization conditions: 80 °C, 30 min, 200 mmol hydrogen<br>Gas phase polymerization conditions: 80 °C, 400 mmol hydrogen, 20 barg<br>Cat/D/wax = catalyst preactivated with D/Ti = 1, and Al/Ti = 2.<br>Normal cat = not preactivated catalyst | | | | | | |

## Claims

**1.** A process for producing propylene polymer compositions, comprising the steps of

- introducing a catalyst component, a cocatalyst and an external donor into an inert fluid for preactivating the catalyst, the catalyst component containing as essential components magnesium, titanium and a halogen,
- optionally activating the preactivated catalyst component by adding cocatalyst to the preactivated catalyst and, optionally, prepolymerizing the activated catalyst in the presence of propylene and/or other α-olefins and/or ethylene, but without adding any additional external donor, before feeding the catalyst into the polymerization step,
- feeding the obtained catalyst to the polymerization step, where polymerizing the propylene, optionally together with other α-olefins and/or ethylene, in the presence of the obtained catalyst is carried out without adding any additional external donor to the process after the preactivation step.

**2.** The process according to claim 1, wherein the titanium compound is $TiCl_3$ or $TiCl_4$.

**3.** The process according to claims I or 2, wherein the molar ratio of the external donor to the titanium component in the preactivation step is 0.1 to 10, preferably 0.3 to 5.

**4.** The process according to any of claims 1 to 3, wherein the molar ratio Al (from cocatalyst)/Ti is in excess of 1, preferably 2 to 10, more preferably 2.5 to 6, during the preactivation.

5. The process according to any of claims 1 to 4, wherein the catalyst is preactivated in the presence of a cocatalyst and an external donor selected from the group consisting of dicyclopentyl dimethoxysilane, diisopropyl dimethoxysilane, methylcyclodimethoxy silane, di-isobutyl dimethoxysilane, and di-t-butyl dimethoxysilane.

6. The process according to claim 6, wherein the external donor is dicyclopentyl dimethoxysilane.

7. The process according to any of claims 1 to 6 wherein the preactivation step comprises the catalyst modifying by polymerizing a vinyl compound.

8. The process according claim 7, wherein the vinyl compound is selected from the group of vinyl cyclohexane, vinyl cyclopentane, vinyl-2-methyl cyclohexane and vinyl norbornane, 3-methyl-1-butene, styrene, p-methyl-styrene, 3-ethyl-1-hexene and mixtures thereof.

9. The process according to claim 7 or 8, wherein the catalyst modification is carried out in a medium selected from the group of isobutane, propane, pentane, hexane or a viscous substance, which is inert to the reactants.

10. The process according to any of claims 1 to 9, wherein the cocatalyst is selected from the group of aluminium compounds, alkaline metal compounds and alkaline earth metal compounds, preferably organoaluminium compounds.

11. The process according to any of claims 1 to 10, wherein propylene polymerization is carried out in at least one reactor selected from the group of slurry and gas phase reactors.

12. The process according to claim 11, wherein propylene is polymerized by subjecting propylene and optionally other $\alpha$-olefins and/or ethylene to polymerization in a plurality of polymerization reactors connected in series.

13. The process according to any of claims 1 to 12, wherein the polymerization product of the slurry or the gas phase reactor is fed into a further reactor in which the polymerization product is combined with an elastomeric component to produce a modified polymerization product.

14. The process according to any of claims 1 to 13, wherein the polymers produced by the process of any of the preceding claims are used for preparing polymer articles by moulding such as injection moulding, compression moulding, thermoforming, blow moulding, or foaming or extrusion.

15. The process according to claim 14, wherein the polymers are used for preparing pipes, cables, tubes, cups, pails, bottles, boxes, containers, automotive parts, appliances, technical articles, caps, closures, lids, sheets or films.

## Revendications

1. Procédé de production de compositions de polymères de propylènes, comprenant les étapes :

   - d'introduction d'un composant catalyseur, d'un co-catalyseur et d'un donneur externe dans un fluide inerte afin de pré-activer le catalyseur, le composant catalyseur contenant comme composants essentiels du magnésium, du titane et un halogène,
   - éventuellement d'activation du composant catalyseur pré-activé en ajoutant un co-catalyseur au catalyseur pré-activé et éventuellement, de pré-polymérisation du catalyseur activé en présence de propylène et/ou d'autres $\alpha$-oléfines et/ou d'éthylène, mais sans ajout d'aucun donneur externe supplémentaire, avant alimentation du catalyseur dans l'étape de polymérisation,
   - d'alimentation du catalyseur obtenu vers l'étape de polymérisation, où la polymérisation du propylène, éventuellement de concert avec d'autres $\alpha$-oléfines et/ou de l'éthylène, en présence du catalyseur obtenu est effectuée sans ajout d'aucun donneur externe supplémentaire au procédé après l'étape de pré-activation.

2. Procédé selon la revendication 1, dans lequel le composé de titane est $TiCl_3$ ou $TiCl_4$.

3. Procédé selon la revendication 1 ou 2, dans lequel le rapport molaire du donneur externe / composant titane dans l'étape de pré-activation est de 0,1 à 10, de préférence de 0,3 à 5.

**4.** Procédé selon l'une quelconque des revendications 1 à 3, dans lequel le rapport molaire Al (issu du co-catalyseur) /Ti est supérieur à 1, de préférence de 2 à 10, de manière davantage préférée de 2,5 à 6, durant la pré-activation.

**5.** Procédé selon l'une quelconque des revendications 1 à 4, dans lequel le catalyseur est pré-activé en présence d'un co-catalyseur et d'un donneur externe choisi dans le groupe consistant en du dicyclopentyle diméthoxysilane, du diisopropyle diméthoxysilane, du méthylecyclodiméthoxysilane, du di-isobutyle diméthoxysilane, et du di-t-butyle diméthoxysilane.

**6.** Procédé selon la revendication 6, dans lequel le donneur externe est le dicyclopentyle diméthoxysilane.

**7.** Procédé selon l'une quelconque des revendications 1 à 6, dans lequel l'étape de pré-activation comprend le catalyseur modifiant par polymérisation un composé vinyle.

**8.** Procédé selon la revendication 7, dans lequel le composé vinyle est choisi dans le groupe du vinyle cyclohexane, du vinyle cyclopentane, du vinyle-2-méthyle cyclohexane et du vinyle norbornane, du 3-méthyl-1-butène, du styrène, du p-méthyl-styrène, du 3-éthyl-1-hexène et des mélanges de ceux-ci.

**9.** Procédé selon la revendication 1 ou 8, dans lequel la modification du catalyseur est effectuée dans un milieu choisi dans le groupe de l'isobutane, du propane, du pentane, de l'hexane ou d'une substance visqueuse, qui est inerte par rapport aux réactifs.

**10.** Procédé selon l'une quelconque des revendications 1 à 9, dans lequel le co-catalyseur est choisi dans le groupe de composés de l'aluminium, de composés de métaux alcalin, et de composés de métaux alcalino-terreux, de préférence de composés organoaluminium.

**11.** Procédé selon l'une quelconque des revendications 1 à 10, dans lequel la polymérisation du propylène est effectuée dans au moins un réacteur choisi dans le groupe des réacteurs en phase liquide chargé et en phase gazeuse.

**12.** Procédé selon la revendication 11, dans lequel le propylène est polymérisé en soumettant le propylène et éventuellement d'autres $\alpha$-oléfines et/ou de l'éthylène à une polymérisation dans plusieurs réacteurs de polymérisation connectés en série.

**13.** Procédé selon l'une quelconque des revendications 1 à 12, dans lequel le produit de polymérisation du réacteur en phase liquide chargé ou du réacteur en phase gazeuse est alimenté dans un réacteur supplémentaire dans lequel le produit de polymérisation est combiné avec un composant élastomère afin de produire un produit de polymérisation modifié.

**14.** Procédé selon l'une quelconque des revendications 1 à 13, dans lequel les polymères produits par le procédé de l'une quelconque des revendications précédentes sont utilisés pour la préparation d'articles polymères par un moulage tel qu'un moulage par injection, un moulage par compression, un thermoformage, un moulage par extrusion-soufflage ou par moussage ou par extrusion.

**15.** Procédé selon la revendication 14, dans lequel les polymères sont utilisés afin de préparer des tuyaux, des câbles, des tubes, des tasses, des seaux, des bouteilles, des boîtes, des conteneurs, des pièces automobiles, des appareils, des articles techniques, des bouchons, des clôtures, des couvercles, des feuilles ou des films.

**Patentansprüche**

**1.** Verfahren zur Herstellung von Propylenpolymer-Zusammensetzungen, das die Stufen umfaßt:

- Einführen einer Katalysatorkomponente, eines Cokatalysators und eines externen Donors in ein inertes Fluid, um den Katalysator zuvor zu aktivieren, wobei die Katalysatorkomponente Magnesium, Titan und ein Halogen als wesentliche Komponenten enthält,
- wahlweises Aktivieren der voraktivierten Katalysatorkomponente durch Zugabe von Cokatalysator zum voraktivierten Katalysator und wahlweises Vorpolymerisieren des aktivierten Katalysators in Gegenwart von Propylen und/oder anderen $\alpha$-Olefinen und/oder Ethylen, wobei allerdings kein zusätzlicher externer Donor hinzugegeben wird, vor der Zuführung des Katalysators in die Polymerisationsstufe,

- Zuführen des erhaltenen Katalysators in die Polymerizationsstufe, wo die Polymerisation des Propylens, wahlweise zusammen mit anderen α-Olefinen und/oder Ethylen, in Gegenwart des erhaltenen Katalysators durchgeführt wird, ohne daß weiterer externer Donor in das Verfahren nach der Voraktivierungsstufe hinzugegeben wird.

**2.** Verfahren nach Anspruch 1, worin die Titanverbindung $TiCl_3$ oder $TiCl_4$ ist.

**3.** Verfahren nach Anspruch 1 oder 2, worin das Molverhältnis des externen Donors zur Titankomponente in der Voraktivierungsstufe 0,1 bis 10, bevorzugt 0,3 bis 5, beträgt.

**4.** Verfahren nach einem der Ansprüche 1 bis 3, worin das Molverhältnis Al (vom Cokatalysator)/Ti mehr als 1, bevorzugt 2 bis 10, insbesondere 2,5 bis 6, während der Voraktivierung beträgt.

**5.** Verfahren nach einem der Ansprüche 1 bis 4, worin der Katalysator in Gegenwart eines Cokatalysators und eines externen Donors, ausgewählt aus der Gruppe, die aus Dicyclopentyldimethoxysilan, Diisopropyldimethoxysilan, Methylcyclodimethoxysilan, Diisobutyldimethoxysilan und Di-tert.-butyldimethoxysilan besteht, voraktiviert wird.

**6.** Verfahren nach Anspruch 6, worin der externe Donor Dicyclopentyldimethoxysilan ist.

**7.** Verfahren nach einem der Ansprüche 1 bis 6, worin die Voraktivierungsstufe den Katalysator umfaßt, der durch Polymerisation einer Vinylverbindung modifiziert wird.

**8.** Verfahren nach Anspruch 7, worin die Vinylverbindung aus der Gruppe von Vinylcyclohexan, Vinylcyclopentan, Vinyl-2-methylcyclohexan und Vinylnorboman, 3-Methyl-1-buten, Styrol, p-Methylstyrol, 3-Ethyl-1-hexen und Mischungen daraus gewählt wird.

**9.** Verfahren nach Anspruch 7 oder 8, worin die Katalysatormodifikation in einem Medium durchgeführt wird, das aus der Gruppe Isobutan, Propan, Pentan, Hexan oder einer viskosen Substanz, die inert gegenüber dem Reaktionsteilnehmern ist, gewählt ist, durchgerührt wird.

**10.** Verfahren nach einem der Ansprüche 1 bis 9, worin der Cokatalysator aus der Gruppe Aluminiumverbindungen, Alkalimetallverbindungen und Erdalkalimetallverbindungen, bevorzugt Organoaluminiumverbindungen, gewählt wird.

**11.** Verfahren nach einem der Ansprüche 1 bis 10, worin die Propylenpolymerisation in mindestens einem Reaktor, der aus der Gruppe Aufschlämmungs- und Gasphasenreaktoren gewählt ist, durchgeführt wird.

**12.** Verfahren nach Anspruch 11, worin das Propylen polymerisiert wird, indem das Propylen und wahlweise andere α-Olefine und/oder Ethylen einer Polymerisation in einer Vielzahl von Polymerisationsreaktoren, die in Serie verbunden sind, unterworfen werden.

**13.** Verfahren nach einem der Ansprüche 1 bis 12, worin das Polymerisationsprodukt des Aufschlämmungs- oder Gasphasenreaktors in einen weiteren Reaktor geleitet wird, worin das Polymerisationsprodukt mit einer elastomeren Komponente vereint wird, um ein modifiziertes Polymerisationsprodukt herzustellen.

**14.** Verfahren nach einem der Ansprüche 1 bis 13, worin die Polymere, die mit einem Verfahren nach einem der vorangegangenen Ansprüche hergestellt werden, dazu verwendet werden, Polymergegenstände durch Formen, wie Spritzgießen, Formpressen, Thermoformung, Blasformung oder Aufschäumen oder Extrusion herzustellen.

**15.** Verfahren nach Anspruch 14, worin die Polymere dafür verwendet werden, Rohre, Kabel, Röhren, Becher, Kübel, Flaschen, Kästen, Behälter, Automobilteile, Werkzeuge, technische Gegenstände, Kappen, Verschlüsse, Deckel, Folien oder Filme herzustellen.